# EUROPEAN PATENT APPLICATION

(11) **EP 4 624 253 A1**
(43) Date of publication of application: **01.10.2025**
(21) Application number: 24173328.6
(22) Date of filing: 30.04.2024
(51) Int. Cl.: B60P 7/08, B25B 13/50

(54) **CONTAINER LASHING DEVICE**

(30) Priority: 29.03.2024 EP 24167875
(71) Applicant: Universiteit Antwerpen, 2000 Antwerpen (BE)
(72) Inventor: DAMS, Francis, 2020 Antwerp (BE); PAUWELS, Lore, 2020 Antwerp (BE); NEYRINCK, Johan, 2020 Antwerp (BE); VERWULGEN, Stijn, 2020 Antwerp (BE); VAN GASTEL, Alexander, 2020 Antwerp (BE); VAN CAMP, Brent, 2020 Antwerp (BE); HENDERIECKX, Senne, 2020 Antwerp (BE)
(74) Representative: IP HILLS NV

(57) **Abstract**

Container lashing device for tightening and/or untightening a turnbuckle tensioning a lashing cable, the lashing device including a body and a head fixedly connected to each other by a respective corresponding connecting portion, wherein the head includes a first portion substantially in line with the body including said connecting portion and a transitional portion and a second portion which is at an angle to a centre line of the body, the second portion of the head being configured to be inserted into the turnbuckle.

## Description

### Field of the Invention

The present invention generally relates to a container lashing device for tightening and/or untightening a turnbuckle tensioning a lashing cable or a lashing bar, which may for example secure a stack of containers on a vessel or in a harbour.

### Background of the Invention

Containers on vessels are often stacked in relatively high piles or stacks of containers. These stacks of containers are then protected by lashing cables against sliding or shifting, for example due to heavy sea. Dockworkers or mariners, in particular specialized lashers, have to tighten or untighten said lashing cables manually, in particular a turnbuckle, which is often done in relatively difficult positions, at heights, squeezed between stacks of containers without much room or being at least partially hampered by a railing. As a result, said dockworkers often work in a relatively bad posture, putting a relatively high strain on their body.

It is known to use a lashing tool or a container turnbuckle wrench, for tightening or untightening these lashing cables, in particular for the first rotation to untighten or the last rotation to tighten a lashing cable via the turnbuckle. Such a lashing tool may for example be a relatively short straight stick or bar which can increase a moment arm to tighten or untighten a lashing cable. Other shapes can include a Y-shaped tool, a U-shaped tool or a hooked tool. However, the relatively difficult working conditions put some limitations on such a tool. The tool should be relatively compact to avoid a slow-down of the work. The tool should be relatively lightweight such that the lashers can take it along while climbing on ladders and through hatches to reach the turnbuckle of the lashing cable. The tool should also be relatively easy to use in various situations, for example when two lashing cables are very close to one another, or when turnbuckles of two different lashing cables are crossing each other.

A problem associated with said known lashing devices is that they are prone to material failure and breaking caused by the high stress put on the lashing tool. However, when such a lashing tool breaks while the user puts a lot of force on it, a sudden breakage may cause the user to lose his balance and plummet down, and/or cause the user to be hit by a broken part of the lashing tool, which can have severe consequences for the user when the user is using the tool in relatively dangerous working conditions.

### Summary of the Invention

It is therefore an aim of the present invention to solve or at least alleviate one or more of the above-mentioned problems. In particular, the invention aims at providing an improved lashing device allowing relatively secure operation of the device.

To this aim, according to the invention, there is provided a container lashing device having the features of claim 1. In particular, the container lashing device is configured to be used for tightening and/or untightening a turnbuckle tensioning a lashing cable or a lashing bar protecting for example a stack of containers. The lashing device includes a body and a head. The body and the head are fixedly connected to each other by a respective corresponding connecting portion. One of the head and the body can for example include an insertable connecting portion, while the other of the head and the body can include a corresponding receiving connecting portion configured to receive the insertable connecting portion. The body and the head are preferably manufactured as two separate parts and are assembled and fixedly connected to each other afterwards to form the lashing device. The body is configured to be gripped by a user. The head includes a first portion or straight portion substantially in line with the body, said first portion including said connecting portion of the head as well as a transitional portion. The head further includes a second portion or an angled portion which is at an angle to a centre line of the body, the centre line of the body being substantially in line with a centre line of the first portion of the head. In other words, the angled portion is also at an angle to a centre line of the first portion of the head. The second portion of the head is configured to be inserted into the turnbuckle, in particular between two substantially parallel tensioners of said turnbuckle tensioning the lashing cable or lashing bar. In an inventive way, the container lashing device further comprises a rigid safety pin, rigid meaning that the pin is not made of a flexible material. The rigid safety pin extends in a bore, the bore being included at least partially in said connecting portion, in particular in the insertable connecting portion of one of the head and the body, and in said transitional portion of the first portion of the head. This positioning of the safety pin can in particular protect the portion of the lashing device taking on the highest load during operation of the lashing device, in particular a transition between the body and the head, more in particular a transition between the connecting portion of the head and the body and the transitional portion of the head protruding from the body. The rigid safety pin is fixated to said transitional portion of the first portion of the head. The fixation of the rigid safety pin to said transitional portion of the head can be obtained in many different ways. In case material fatigue of the lashing device led to a sudden breakage of at least part of the head, the head would not completely break off thanks to the rigid safety pin being fixated to the transitional portion of the head. At the same time, since the rigid safety pin is a separate element within a bore, it is highly unlikely that material fatigue and/or a breakage would occur simultaneously in the head and in the safety pin, so the safety pin could at least partly take on the load, thus holding the head at least partly together. In this way, safety of the user of the lashing device can be improved in that the user does not take on the energy released by the sudden breakage of the head and/or may be protected against injuries caused by broken parts flying around.

The rigid safety pin may for example be fixated to said transitional portion by a press-fit. The press-fit may be limited to an end of the rigid safety pin or may extend over a relatively large part, or even over substantially an entire length of the rigid safety pin. In spite of a press-fit, load exerted on the head of the lashing device may lead to a critical crack developing in the head, which may at least partly be stopped at a transition between parts and/or material, for example between the head and the rigid safety pin, such that the rigid safety pin can at least partly hold the head of the lashing device together in case of a sudden breakage.

Additionally, and/or alternatively, the lasing device may include a fixation element and the rigid safety pin may be fixated to said transitional portion by said fixation element included in an end of the rigid safety pin, said fixation element being configured to fixate said end to a corresponding fixation element at an end of the bore in said transitional portion. Such a fixation element is configured to extend in line with a longitudinal direction of the rigid safety pin. Said corresponding fixation elements may for example include a threaded end, such as a screw, and a corresponding socket, or a stepped head and a corresponding socket. It will be clear to the person skilled in the art that each of the corresponding fixation elements may be mounted to the end of one of the rigid safety pin or the bore.

Additionally, and/or alternatively, the lasing device may include a transverse fixation element and the rigid safety pin can be fixated to said transitional portion by a transverse fixation element configured to fixate the rigid safety pin to said transitional portion. The rigid safety pin and the transitional portion of the head can then include at least one transverse bore configured to receive said transverse fixation element. Said transverse fixation element may for example be press-fitted into said transverse bore. Said transverse fixation element may for example be a slotted spring pin, or any other suitable fixation element. At the same time, a transverse fixation element can prevent rotation of the safety pin within the bore along its longitudinal axis.

The rigid safety pin can advantageously be further fixated to the connecting portion of the head. Even if a breakage is most likely to happen near the border between the connecting portion and the transitional portion of the first portion of the head, a further fixation of the rigid safety pin to the connecting portion of the first portion of the head can further decrease the risk of the head completely breaking off.

In analogy with the fixation of the rigid safety pin to the transitional portion of the first portion of the head, the rigid safety pin can be fixated to the connecting portion of the head in many different ways, for example by a press-fit of at least part of the rigid safety pin in the connecting portion of the head or by a fixation element at an end of the rigid safety pin extending substantially in line with the rigid safety pin. It is preferred that the lashing device can comprise a further transverse fixation element configured to fixate the rigid safety pin to said connecting portion. The rigid safety pin and the connecting portion of the head can then include at least one transverse bore configured to receive said further transverse fixation element. So, most preferably, the lashing device can include two transverse fixation elements, of which a first element is configured to fixate the rigid safety pin to the transitional portion of the head and of which a second element is configured to fixate the rigid safety pin to the connecting portion of the head.

A diameter of the bore configured to receive the rigid safety pin may advantageously be larger than a diameter of the pin such that there is a play, in particular a lateral play, between the bore and the pin. This play may extend over at least part of the bore and the rigid safety pin, or over substantially an entire length of the bore, in particular when the rigid safety pin is not fixated to the transitional portion of the head by a press-fit. Thanks to the play between the bore and the rigid safety pin, the rigid safety pin does not take, or hardly takes, any load exerted on the lashing device during use, in particular on the head of the lashing device. As a result, the rigid safety pin is better protected against material fatigue than the rest of the lashing device. In this way, robustness of the lashing device and safety of the user of the lashing device can be further improved.

The play or gap between the bore and the safety pin can advantageously be comprised in a range of more or less 0.05 mm to more or less 0.4 mm. More preferably, the play between the bore and the safety pin can be around 0.2 mm, for example more or less 0.1 mm on all sides around the safety pin. In other words, a diameter of the safety pin may preferably be 0.05 mm to more or less 0.4 mm smaller than a diameter of the bore, for example around 0.2 mm smaller. These dimensions have proven to provide a sufficient gap or clearance between the bore and the safety pin such that load exerted on the lashing device is not transferred, or is hardly transferred, to the safety pin.

It is preferred that the bore extends substantially in line with the body, more preferably with the centre line of the body. A substantially centrally positioned bore can equally well take on a load at failure of the head, independently of a direction or place of failure or breakage. Said bore may be positioned off axis or slightly inclined with respect to a centre line of the body or of the connecting portion, which may be favourable when load is expected to come from a preferred direction. However, the bore is not meant to extend substantially transversely with respect to said centre line. A main extension of the bore should remain substantially in line with the body.

The rigid safety pin may advantageously be made of a material configured to absorb an energy of at least 28 MPa or 2800 MPa%, more preferably of 56 MPa, more preferably of 84 MPa, in particular having a minimal ultimate tensile strength of 300MPa, preferably between 700 MPa and 850 MPa and a minimal elongation at break of 9%, more preferably of 12%, the absorbed energy being a product of an ultimate tensile strength and an elongation at break of the material. As an example, the rigid safety pin may be made of steel, preferably quenched and tempered steel, such as C45+ QT steel. As a result of these material properties, the rigid safety pin can hold the lashing device together, even in case of a sudden rupture, in particular of the head, for example due to material fatigue, since a material having these properties cannot be broken by human force. In this way, a lashing tool with improved safety can be provided.

A diameter of the rigid safety pin can preferably be lower than 60% of a diameter of the connecting portion of the first portion of the head. This is a compromise between solidity of the rigid safety pin, which can be increased with an increased diameter, and solidity of the connecting portion of the first portion of the head, which may not be weakened by the bore configured to receive the rigid safety pin.

The connecting portion of the first portion of the head can include a narrowed portion configured to be received within the corresponding connecting portion at an end of the body. The narrowed portion may then be considered as the insertable connecting portion while the end of the body may then include the receiving connecting portion. Such an arrangement may be manufactured more easily over an arrangement in which the body includes the insertable connecting portion and the head the receiving connecting portion. The narrowed portion can preferably, but need not, be a cylindrical portion. Alternatively, the narrowed portion could for example have a substantially rectangular or square cross-section to be received in a receiving connecting portion having a corresponding shape.

The head of the container lashing device may be fixedly connected to the body by a press fit, in particular by a press fit of the insertable connecting portion, for example the narrowed portion, received within the receiving connecting portion, for example the receiving connecting portion at an end of the body. A press fit is a fixed connection allowing a separate manufacturing of the head and the body and a relatively easy connection. At the same time the press fit can support a relatively high load after connection. Other types of fixed connections may be used to an advantage as well.

The second portion of the head can advantageously include an angle of substantially 45° (degrees) with the centre line of the body. Said angled head portion can allow a user to perform the lashing operation in a reduced space. The user can perform a first rotating movement over a given angle, then turn the lashing device over 180° (degrees) along a longitudinal axis of the lashing device and finally continue said rotating lashing movement in the same direction as the first rotating movement.

The second portion of the head may preferably include two pull and push surfaces on opposite sides of said second portion of the head. Said two pull and push surfaces can be configured to engage at least one of the tensioners of the turnbuckle. More preferably, the two pull and push surfaces can be configured to simultaneously engage the two substantially parallel tensioners of the turnbuckle such that a load exerted on the lashing device can be transferred to said turnbuckle via the two pull and push surfaces. The second portion of the head may for example have a shape of a substantially trapezoidal bar. In particular, the two pull and push surfaces may have a substantially rectangular shape while the sides in between said two pull and push surfaces may be substantially trapezoidal. As a result, the second portion of the head may be slightly tapered towards an end.

The second portion of the head, in particular the said pull and push surfaces, may include a plurality of grooves. Said grooves can improve a grip on the tensioners of the turnbuckle. Said grooves may for example include semicircular grooves or other shapes of grooves. Said grooves can preferably extend substantially transversally with respect to a longitudinal axis of the second portion of the head.

An end of the second portion of the head can advantageously include a semicircular protrusion positioned transversely to said second portion. The protrusion has a shape of a crescent moon including a semi-circular circumferential portion and a substantially straight portion. The semicircular circumferential portion can help to insert the lashing device into a turnbuckle. The substantially straight portion is preferably positioned substantially transverse to a centre line of the second portion of the head while extending beyond a width of the second portion of the head. As a result, the semicircular protrusion and the second portion of the head include two substantially right angles on either side of the second portion of the head. Said substantially right angles may be configured to engage the turnbuckle, in particular one of the tensioners of the turnbuckle. In this way, the semicircular protrusion can stop the lashing device from slipping off the tensioner by hooking behind the tensioner, which enhances safety of the lashing device.

The first portion of the head can also include a supportive protrusion at a substantially right angle with the second portion of the head. Said supportive protrusion can help a user to insert the lashing device into the turnbuckle.

Finally, the container lashing device may advantageously further comprise a tapered tail fixedly connected to the body, in particular to an end of the body opposite to the head. The tapered tail may be connected to the body via a press fit or in any other way. The tapered tail may also be configured to be inserted into a turnbuckle to increase a lever on the turnbuckle, in particular when there is not enough room around the turnbuckle to insert the head into said turnbuckle.

### Brief Description of the Drawings

Fig. 1 shows a schematic perspective view of a situation where a preferred embodiment of a container lashing device according to the invention may be used;
Fig. 2 shows a perspective view of a preferred embodiment of a lashing device according to the invention;
Fig. 3 shows a schematic top view of the lashing device of Figure 2 when in use;
Fig. 4a and 4b show a top view and a cross-sectional view of the preferred embodiment of the lashing device of Figure 2;
Fig. 5a, 5b and 5c show a perspective view, a top view and a cross-sectional view of a head of the lashing device of Figure 2;
Fig. 6a, 6b and 6c show a perspective view, a top view and a cross-sectional view of the rigid safety pin of the lashing device of Figure 2;
Fig. 7a and 7b show a top view and a cross-sectional view of a body of the lashing device of Figure 2; and
Fig. 8a and 8b show a top view and a combined side and cross-sectional view of a tail of the lashing device of Figure 2.

### Detailed Description of Embodiment(s)

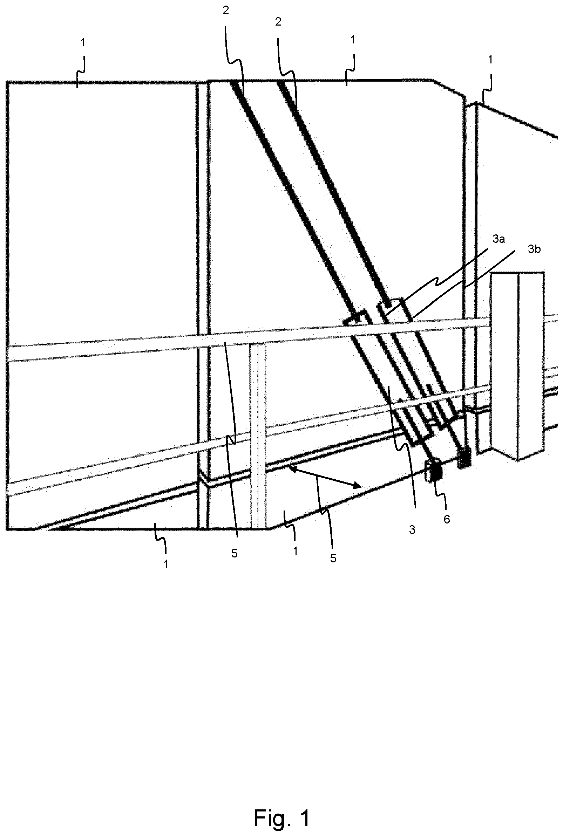

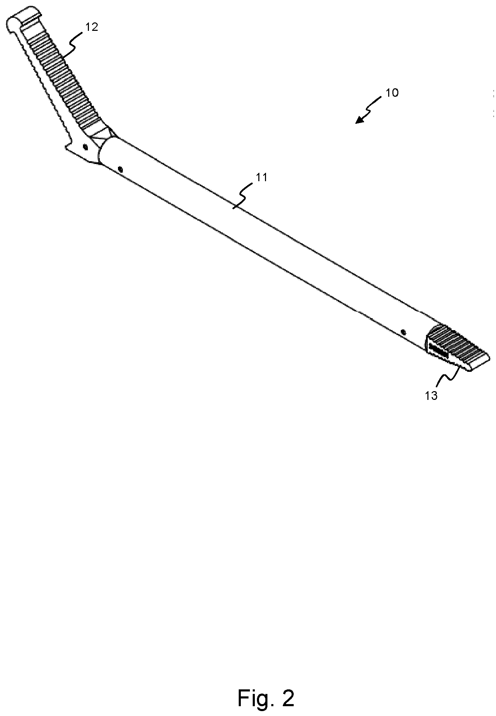

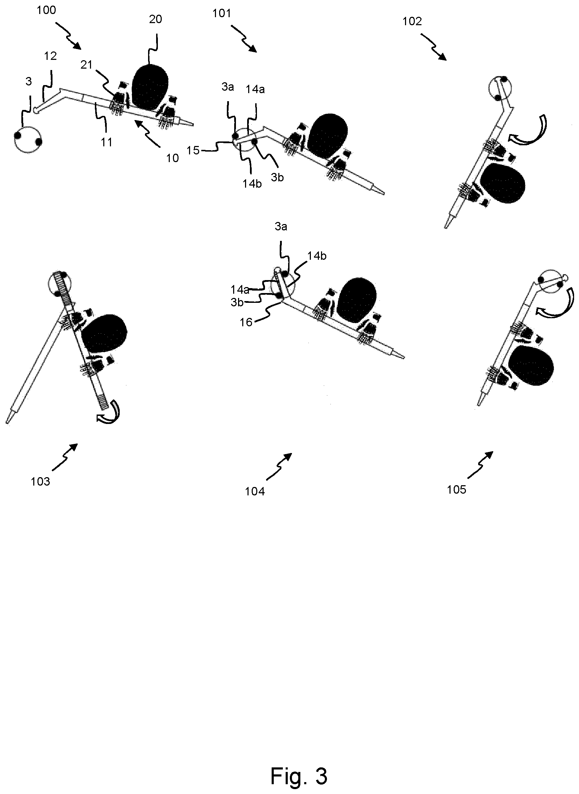

Figure 1 shows a schematic perspective view of a situation where a preferred embodiment of a lashing device 10 according to the invention, as for example shown in Figure 2, or any other lashing tool may be used. Figure 1 shows a stack of containers 1. The stack of containers 1 is secured by two lashing cables 2 or lashing bars including a turnbuckle 3 to tighten and untighten the lashing cables 2. One end of the cables 2 may be attached to a hook 6 on a deck of a ship. A railing 4 on said deck may protect people from falling into a gap 5, which may be relatively deep, between the deck and the stack of containers 1. A lasher, who is a worker in a harbour in charge of tightening and untightening the lashing cables 2, is often working in relatively dangerous and/or difficult situations or postures. In the situation as illustrated, a lasher may be working from behind the railing 5 next to the gap 5 which may be dozens of metres deep. To tighten or untighten the cables 2, the lasher may use a lashing stick or tool or a dedicated lashing device 10, for example as shown in Figure 2, according to a method explained with respect to Figure 3. A bar or the lashing device 10 may be inserted in between the two substantially parallel tensioners 3a, 3b of the turnbuckle 3 to increase a lever on the turnbuckle, but in many cases, there may not be enough space to rotate any tool and/or to operate safely over a railing 4 and next to a gap 5.

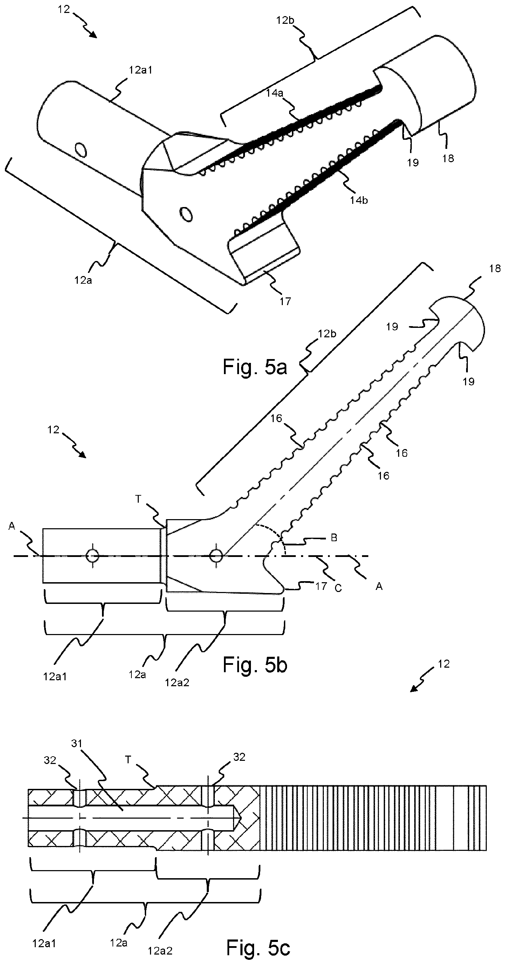

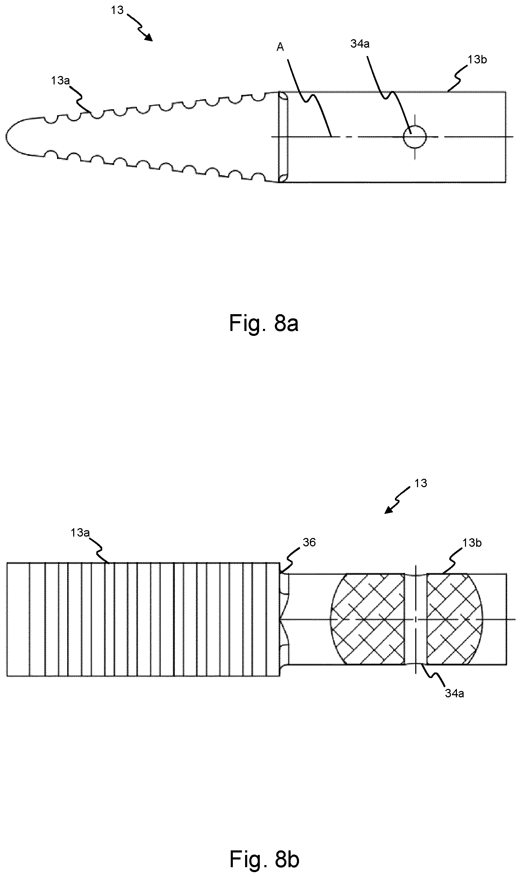

Figure 2 shows a perspective view of a preferred embodiment of a container lashing device 10 according to the invention. The container lashing device 10 includes a body 11 and a head portion 12, preferably also a tail portion 13, which are preferably, but need not be, two or three separately manufactured pieces. The head 12 is fixedly connected to the body by corresponding connecting portions, for example by press fitting the head into a first end of the body 11. The head 12 is configured to be inserted into the turnbuckle 3, in particular between the two tensioners 3a, 3b of the turnbuckle 3 to engage said two tensioners 3a, 3b to transfer a load exerted on the lashing device 10 to the turnbuckle 3. Detailed features of the head 12 will be described with respect to Figures 5a, 5b and 5c. The body 11 is configured to be gripped by the user to increase a lever when tightening or untightening the turnbuckle 3. A longer body may provide a longer arm and increase leverage on the turnbuckle 3, but at the same time, a longer arm increases the time needed to perform the rotation of the lashing device 10, increases the weight of the lashing device 10 and may prevent the lasher from using the lashing device 10 when space is limited. The tail 13 of the lashing device 10 is also configured to be inserted into a turnbuckle 3, in particular when there is not enough space to use the head 12. The tail 13 is preferably shorter than the head 12 and may be in line with the body 11, contrary to the head 12. The tail 13 is also fixedly connected to the body 11, for example via a press fit, or via any other connecting means known to the person skilled in the art. Features of the tail 13 will be discussed more in detail with respect to Figures 8a and 8b.

Figure 3 shows a schematic top view of the lashing device of Figure 2 when in use by a user 20. In a first step 100, the user 20, in particular the lasher, grips the lashing device 10, in particular the body 11 of the lashing device 10, with both hands 21. The lashing device 10 is held substantially transversely in front of the user 20. In the next step 101, the user 20 inserts the head 12 of the lashing device 10 into a turnbuckle 3 to be tightened or untightened. In particular, the head 12 is inserted in between the two tensioners 3a, 3b of the turnbuckle 3 such that a first pull and push surface 14a of the head 12 engages a first tensioner 3a, while the other pull and push surface 14b opposite the first one engages a second tensioner 3b. The semicircular protrusion 15 of the head can preferably hook onto the first tensioner 3a. In a next step 102, the user pushes the lashing device 10 over an angle of more or less 90° resulting in an equivalent turn of the turnbuckle 3. Then, in step 103, the user 20 rotates the lashing device 10 itself over more or less 180° around the centre line of the second portion of the head, i.e. around the angled portion of the head 12. As a result, shown in step 104, the first pull and push surface 14a of the head 12 engages the second tensioner 3b and the other push and pull surface 14b engages the first tensioner 3a. The supportive protrusion 16 may, but need not, engage the second tensioner 3b. In the final step 105, the user can now push lashing device 10 in the same direction over an angle of more or less 90°. This way of using the lashing device 10 is an ergonomic improvement for the user. However, comparing steps 102 and 105, it can be seen that while the lasher can push the lashing device 10 twice in the same direction, the lashing device 10, and in particular the head 12, is loaded in opposite directions, which may cause material failure without additional measures, as recognized by the present invention. Other ways of using the lashing device 10 than the way described here may be favourable as well, depending on the space the user disposes of to do any rotation or on the reachability of the turnbuckle 3.

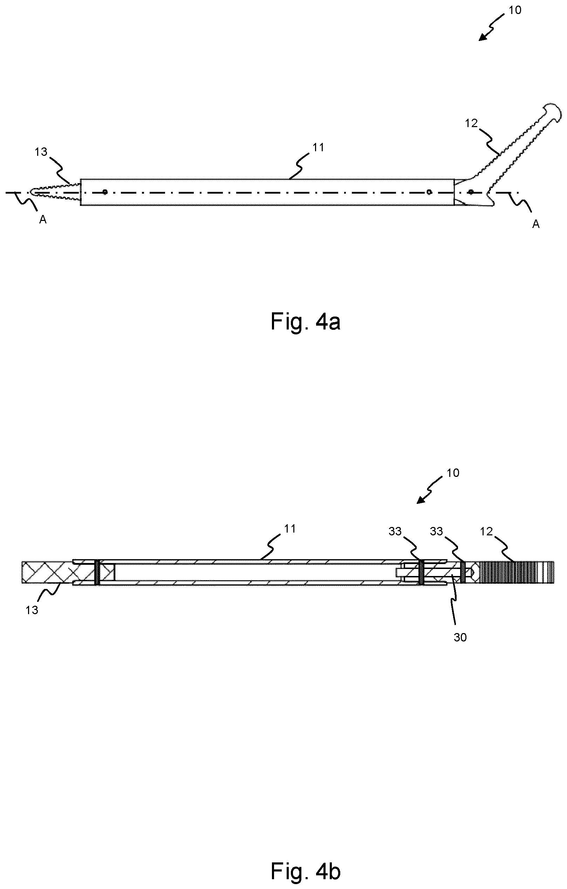

Figures 4a and 4b show a top view and a cross-sectional view of the preferred embodiment of the lashing device of Figure 2. The cross-sectional view of Figure 4b is a cross-section along the line A - A indicated in Figure 4a. To enhance safety for the users of the lashing device 10, in particular in case of breakage caused by material failure, the container lashing device 10 according to the present invention further comprises a rigid safety pin 30 extending in a bore, preferably substantially in line with the body 11. The bore is included at least partially in the head 12 and may, but need not, also extend at least partially into the body 11. The rigid safety pin 30 is preferably positioned in line with a centre line of the body 11. The rigid safety pin 30 may be positioned within the bore such that there is a gap and some play between the bore and the pin 30, in particular transversely or laterally. Thanks to this play, when the head 12 is loaded, said load is not transferred to the safety pin 30. Only when the head 12 breaks off, for example due to material failure, does the safety pin 30 take on the load exerted on the lashing device 10. In this way, the safety pin 30 can prevent the head 12 from completely breaking off, which can protect the user of the lashing device 10 against injuries caused by being hit by broken parts and/or by a kickback.

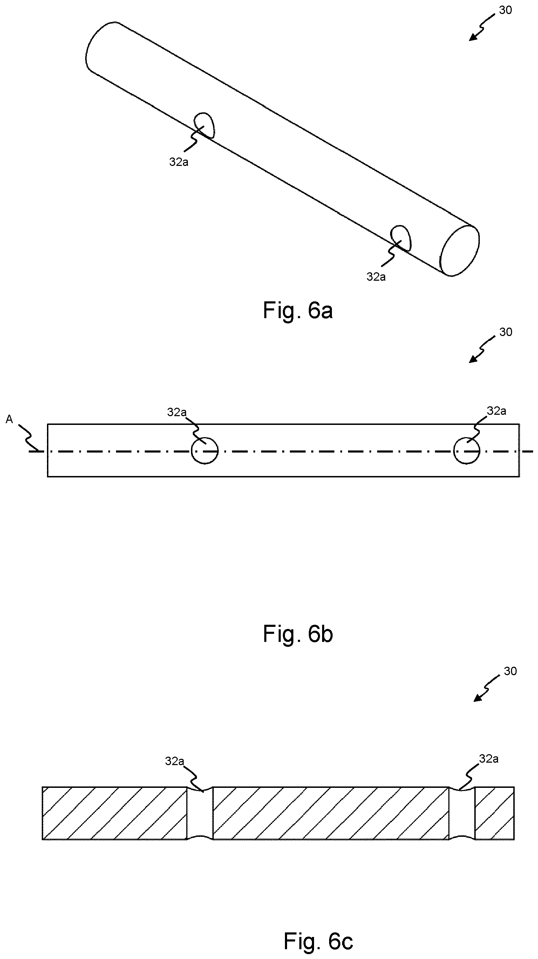

Figures 5a, 5b and 5c show a perspective view, a top view and a cross-sectional view of a head of the lashing device of Figure 2. In analogy with Figures 4a and 4b, the cross-sectional view of Figure 5c is a cross-section along the line A - A indicated in Figure 5b. The head 12 comprises a first portion 12a substantially in line with the body 11 and a second portion 12b which is at an angle to a centre line of the body 11. Since the first portion 12a, or straight portion, is in line with a centre line of the body 11, the second portion 12b, or angled portion, is also at an angle to a centre line C of the first portion 12a of the head 12. The angle B between a centre line of the second, angled, portion 12b and the centre line C of the first portion 12a of the head 12 is preferably more or less 45°. The straight portion 12a of the head further includes a connecting portion 12a1, in particular a narrowed portion, which in the present embodiment is a cylindrical portion configured to be received within a connecting receiving portion at an end of the body 11, and a transitional portion 12a2 extending beyond and in line with the body 11. A diameter of the connecting cylindrical portion 12a1 can preferably be smaller than a width of the transitional portion 12a2, which may have a cuboid or trapezoidal shape. A transition T between the connecting portion 12a1 and the transitional portion 12a2 may preferably be rounded off. The second portion 12b or angled portion of the head 12 can have a cuboid shape or a trapezoidal shape and may be slightly tapered toward an end. Said second portion 12b can preferably include two pull and push surfaces 14a, 14b on opposite sides of said second portion 12b of the head 12. When the lashing device 10 is seen in a top or bottom view, as in Figure 5b, the pull and push surfaces 14a, 14b are facing sidewards. In use, said pull and push surfaces 14a, 14b are configured to engage the tensioners of the turnbuckle 3. Said pull and push surfaces 14a, 14b can include a plurality of grooves 16, for example grooves having a semicircular cross-section extending transversely to a longitudinal extension of said head 12. Said grooves 16 can improve a grip on said tensioners 3a, 3b. An end of the second portion 12b of the head 12 can include a semicircular protrusion 18. The rounded part of the semicircular protrusion 18 faces away from the second portion 12b of the head while a straight part of the semicircular protrusion faces the second portion 12b. A diameter of the semicircular protrusion 18 is larger than a thickness of an end of the second portion 12b such that the semicircular protrusion 18 extends transversely beyond the second portion 12b such that two substantially right angles 19 are formed between the semicircular protrusion 18 and the pull and push surfaces 14a, 14b. Said substantially right angles 19 can engage one of the tensioners 3a, 3b and can prevent the lashing device 10 from slipping off the tensioner. In a similar way, the first portion 12a of the head, in particular the transitional portion 12a2, can further include a supportive protrusion 17 at a substantially right angle with the second portion 12b of the head at the opposite end of the semicircular protrusion 18, such that said angle may also engage one of the tensioners 3a, 3b. The head 12 includes a bore 31, preferably extending along a centre line of the first portion 12a of the head 12. A diameter of the bore 31 may, but need not, be larger than a diameter of the rigid safety pin 30 (see Figures 6a, 6b and 6c) which is received in said bore 31 such that there is play between the bore 31 and the rigid safety pin 30. To fixate said rigid safety pin 30 to said transitional portion 12a2 of the first portion of the head, the first portion 12a of the head 12 may include at least one, preferably two transverse bores 32 extending through said first portion 12a transversally to the centre line C of said first portion 12a and configured to receive a transverse fixation element, for example a spring pin 33, as shown in Figure 4b. At least one of said transverse bores 32 may be included in the connecting portion 12a1 while a second transverse bore 32 may for example be included in the transitional portion 12a2. Alternatively, the rigid safety pin 30 can include a threaded end matching a corresponding end in the bore 31 and/or be fixated to said transitional portion via a press-fit.

Figures 6a, 6b and 6c show a perspective view, a top view and a cross-sectional view of the rigid safety pin 30 of the lashing device 10 of Figure 2. The cross-sectional view of Figure 6c is a cross-section along the angled line A - A indicated in Figure 6b. The rigid safety pin 30 is configured to take on the load exerted on the lashing device 10 in case the head 12 would snap or break, for example caused by material fatigue. Thereto, the rigid safety pin is preferably made of a sufficiently hard material, such as for example steel, preferably quenched and tempered steel, for example C45+ steel. The material should preferably have a minimal tensile strength times a minimum elongation at break of 28 MPa or 2800 MPa%, for example a minimal tensile strength of 700 MPa and a minimum elongation at break of 12%. The safety pin 30 can be substantially cylindrical, as shown in Figure 6a. A diameter of said safety pin 30 may preferably be comprised in a range of more or less 8 mm to more or less 12 mm, for example around 10 mm. A maximal diameter of the safety pin 30 does preferably not exceed 60% of a diameter of the connecting portion 12a1, which may be a cylindrical portion, which may have a minimal diameter of 15 mm, preferably of 20 mm, more preferably a diameter of more or less 22 mm. A length of the safety pin may be at least twice the diameter of the safety pin, more preferably at least four times the diameter of the safety pin. As explained with respect to Figure 5c, also the rigid safety pin 30 may preferably include two transverse bores 32a configured to receive a transverse fixation element which can extend both through the first portion of the head 12 as well as through said safety pin 30 such that the rigid safety pin 30 is fixated to the transitional portion 12a2, and preferably also to the connecting portion 12a1, of the first portion of the head.

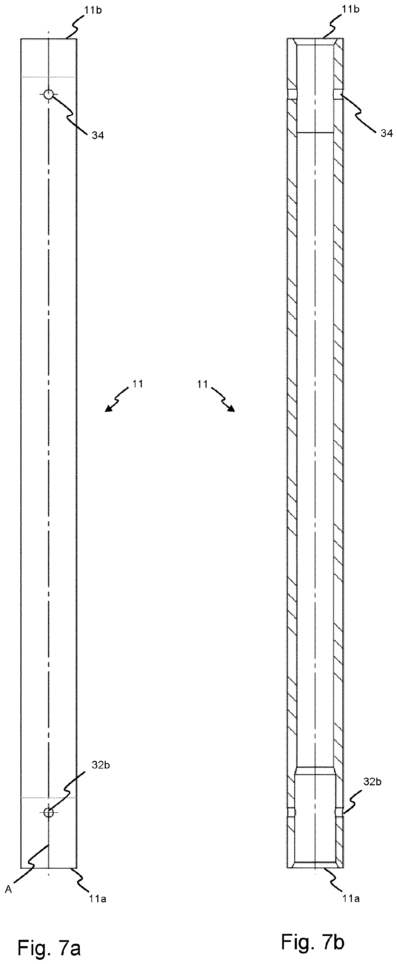

Figures 7a and 7b show a top view and a cross-sectional view of a body 11 of the lashing device 10 of Figure 2. The cross-sectional view of Figure 7b is a cross-section along line A indicated in Figure 7a. It is preferred that the body 11 has a substantially cylindrical shape. The body 11 may, but need not, be substantially hollow. A first end 11a of the body may be configured to receive the head 12, in particular the connecting portion 12a1 of the head 12, which may preferably be a cylindrical portion. Thereto, an internal diameter of the first end 11a of the body 11 may be slightly larger than an internal diameter of the remaining part of the body 11. The head 12 may be press fit into said first end 11a of the body 11, which is then the receiving connecting portion of the body. To further fixate the rigid safety pin 30 to the connecting portion of the head 12, a fixation element may extend transversally through the body 11 and the head 12, for which the body 11 may include a transverse bore 32b. The second end 11b of the body 11, which is opposite the first end 11a, may be configured to receive a tail 13 of the lashing device 10, as shown in Figure 8a. The tail 13 may also be fixedly connected to the body 11 via a press fit and/or by any other fixation element, such as a pin received in a substantially transverse bore 34 in the body 11 adjacent to the second end 11b or a threaded fixation element extending in line with the body 11.

Figures 8a and 8b show a top view and a combined side and cross-sectional view of a tail 13 of the lashing device 10 of Figure 2. The hatched portion of Figure 8b is a cross-sectional view along line A indicated in Figure 8a. The tail 13 can include a tapered portion 13a configured to insert between the tensioners 3a, 3b of the turnbuckle when there is not enough room to use the head 12 of the lashing device 10. Said tapered portion 13a is only tapered in a top or bottom view while a side view of the tail would reveal a substantially rectangular shape of the tapered portion 13a of the tail 13, as can be seen in the cross-section of Figure 8b or in the perspective view of Figure 2. The tail 13 can further include a substantially cylindrical portion 13b configured to be fixedly connected to the body 11, for example by a press fit of said cylindrical portion 13b in the body, in particular in the second end 11b of the body 11. Additionally, and/or alternatively, the tail 13 may be fixated to the body by any known fixation element which may be received in a transverse bore 34a extending through the cylindrical portion 13b of the tail 13. The tapered portion 13a may include a plurality of grooves 35. Said grooves can improve a grip on the tensioners of the turnbuckle 3. Said grooves 35 may for example include semicircular grooves or other shapes of grooves. Said grooves can preferably extend substantially transversally with respect to a longitudinal axis of the tail 13. A transition 36 between said tapered portion 13a and said cylindrical portion 13b can preferably be rounded off.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Container lashing device for tightening and/or untightening a turnbuckle tensioning a lashing cable, the lashing device including a body and a head fixedly connected to each other by a respective corresponding connecting portion, wherein the head includes a first portion substantially in line with the body including said connecting portion and a transitional portion and a second portion which is at an angle to a centre line of the body, the second portion of the head being configured to be inserted into the turnbuckle, wherein the container lashing device further comprises a rigid safety pin extending in a bore; the bore being included at least partially in said connecting portion and in said transitional portion of the first portion of the head, wherein the rigid safety pin is fixated to said transitional portion of the first portion of the head.

2. Container lashing device according to claim 1, wherein the rigid safety pin is fixated to said transitional portion by a press-fit, or wherein the rigid safety pin is fixated to said transitional portion by a fixation element included in an end of the rigid safety pin, said fixation element being configured to fixate said end to a corresponding fixation element at an end of the bore in said transitional portion, or wherein the rigid safety pin is fixated to said transitional portion by a transverse fixation element configured to fixate the rigid safety pin to said transitional portion, wherein the rigid safety pin and the transitional portion of the head include at least one transverse bore configured to receive said transverse fixation element.

3. Container lashing device according to according to any of the preceding claims, wherein the rigid safety pin is further fixated to the connecting portion of the head.

4. Container lashing device according to claim 3, comprising a further transverse fixation element configured to fixate the rigid safety pin to said connecting portion, wherein the rigid safety pin and the connecting portion of the head include at least one transverse bore configured to receive said further transverse fixation element.

5. Container lashing device according to any of the preceding claims, wherein a diameter of the bore is larger than a diameter of the pin such that there is a play between the bore and the pin, in particular wherein the play between the bore and the pin is comprised in a range of more or less 0.05 mm to more or less 0.4 mm.

6. Container lashing device according to any of the preceding claims, wherein the bore extends substantially in line with the body, preferably with the centre line of the body.

7. Container lashing device according to any of the preceding claims, wherein the rigid safety pin is made of a material configured to absorb an energy of at least 28 MPa, more preferably of 56 MPa, more preferably of 84 MPa, in particular having a minimal ultimate tensile strength of 300 MPa and a minimal elongation at break of 9%, wherein the absorbed energy is a product of an ultimate tensile strength and an elongation at break of the material.

8. Container lashing device according to any of the preceding claims, wherein a diameter of the rigid safety pin is lower than 60% of a diameter of the connecting portion.

9. Container lashing device according to any of the preceding claims, wherein the connecting portion of the first portion of the head includes a narrowed portion configured to be received within the corresponding connecting portion at an end of the body, in particular wherein the narrowed portion is a cylindrical portion.

10. Container lashing device according to any of the preceding claims, wherein the head is fixedly connected to the body by a press fit, in particular by a press fit of the connecting portion received within the corresponding connecting portion at an end of the body.

11. Container lashing device according to any of the preceding claims, wherein the second portion of the head includes an angle of substantially 45° with the centre line of the body.

12. Container lashing device according to any of the preceding claims, wherein the second portion of the head includes two pull and push surfaces on opposite sides of said second portion of the head, wherein the second portion of the head, in particular the said pull and push surfaces, includes a plurality of grooves.

13. Container lashing device according to any of the preceding claims, wherein an end of the second portion of the head includes a semicircular protrusion positioned transversely to said second portion.

14. Container lashing device according to any of the preceding claims, wherein the first portion of the head, includes a supportive protrusion at a substantially right angle with the second portion of the head.

15. Container lashing device according to any of the preceding claims, further comprising a tapered tail fixedly connected to the body opposite to the head.
